# FASCICULE DE BREVET EUROPEEN

(11) **EP 0 904 857 B1**
(45) Date de publication et mention de la délivrance du brevet: **15.12.2004**
(21) Numéro de dépôt: 97202842.7
(22) Date de dépôt: 17.09.1997
(51) Int. Cl.: B09B 1/00

(54) **Procédé et ensemble d'extraction de gaz produit par des substances fermentescibles, en particulier des déchets**
Verfahren und Anlage zur Gewinnung von aus vergärbaren Stoffen, insbesondere aus Abfällen entstandenen Gasen
Method and system for withdrawing gases produced by fermentable materials, particularly waste

(43) Date de publication de la demande: 31.03.1999
(60) Demande divisionnaire: 02077947.6
(73) Titulaire: Société publique d'Aide à la Qualité de l'Environnement, S.P.A.Q.U.E., Société Anonyme, 4000 Liège (BE)
(72) Inventeur: Piessens, Paul, 1495 Villers-la-Ville (BE); Scauflaire, Philippe, 7060 Soignies (BE)
(74) Mandataire: Quintelier, Claude

(56) Documents cités:
- EP-A- 0 182 143
- WO-A-94/19120
- US-A- 4 026 355
- US-A- 5 063 519

## Description

La présente invention concerne un procédé de réglage d'un débit d'extraction de gaz produit par des substances fermentescibles pouvant être en contact avec de l'air atmosphérique, lequel procédé comporte l'extraction du gaz produit dans une zone où se trouvent lesdites substances et la collecte dudit gaz dans un réseau d'extraction de gaz pour ensuite être consumé dans un brûleur, le procédé comprenant également une mesure de la pression atmosphérique soit dans ladite zone soit dans une zone périphérique des substances fermentescibles, tant ladite zone que la zone périphérique étant située en dehors dudit réseau d'extraction du gaz, ledit réglage du débit d'extraction du gaz étant réalisé en fonction de ladite pression atmosphérique

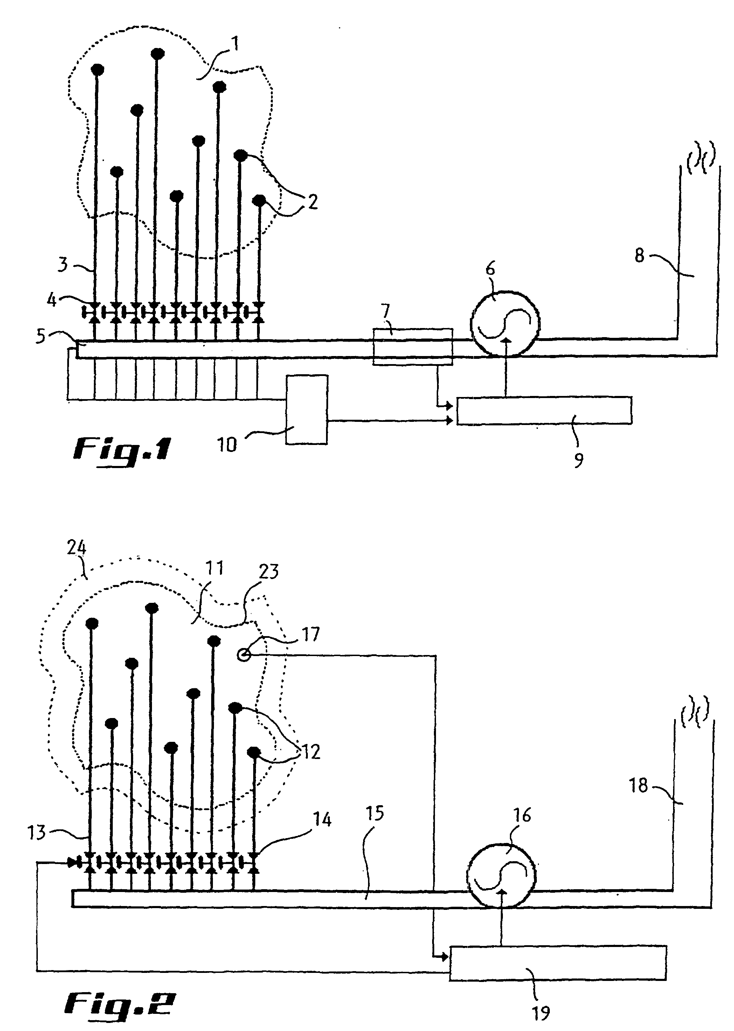

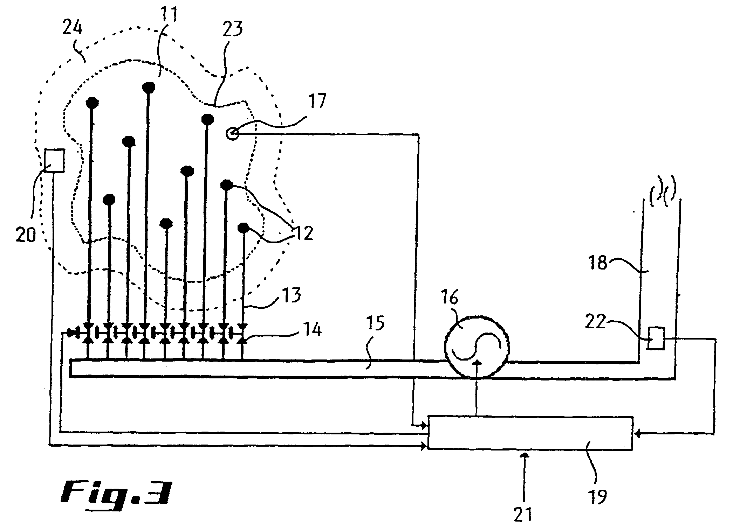

Un tel procédé est connu dans un système de dégazage de décharge, dont le principe est illustré à la figure 1. Du biogaz est produit par la fermentation anaérobie de substances fermentescibles, en particulier des déchets organiques dans une décharge 1. Le gaz est récupéré dans un réseau de dégazage 2-9 qui comporte des puits d'extraction 2 qui sont chacun reliés à des conduits secondaires 3, comportant des vannes manuelles 4. Les conduits secondaires 3 sont reliés à un conduit principal 5, comportant une pompe 6. Le biogaz est ainsi capté dans le réseau sous l'effet de la pompe aspirante 6. Le gaz collecté est envoyé vers un brûleur 8, agencé à brûler le biogaz. Le cas échéant, l'énergie produite est valorisée, par exemple en produisant de l'électricité.

Dans le système connu, il est connu de prendre des dispositions pour limiter au maximum l'entrée d'air dans le réseau d'extraction, afin de garantir une qualité de gaz adéquate et ainsi une combustion satisfaisante. A cette fin, il est connu de placer dans le conduit principal 5 du réseau un organe de mesure de pression 7 afin de mesurer la pression du biogaz dans le réseau. La régulation du système connu est basée sur une consigne de dépression mesurée dans le réseau, par exemple -50 mbar. Cette consigne est déterminée pour correspondre à "l'équilibre" d'exploitation du réseau, c'est-à-dire pour extraire la quantité de gaz produite. Le contrôle de la pompe est effectué, tel qu'illustré à la figure 1, à l'aide d'un automate 9, dans lequel les mesures de l'organe de mesure de pression 7 sont introduites et comparées à la consigne établie. Selon les résultats de la comparaison, le débit de la pompe est maintenu, augmenté ou diminué.

De plus, US-A-5,063,519 décrit un procédé dans lequel il est proposé une méthode de contrôle de l'extraction de gaz de manière à ce que la pression du gaz extrait dans le corps de la décharge se rapproche ou devient égal à la pression atmosphérique. Ceci est obtenu en mesurant en sous-sol la pression du gaz produit par la décharge en différents endroits en dehors du réseau d'extraction et obtenir ainsi une représentation de la perméabilité relative du massif de déchets. Les débits d'extraction au puits de collecte sont donc ajustés de manière à obtenir une pression de gaz dans le sol qui soit égale à zéro ou substantiellement égale à zéro à la pression atmosphérique.

Il est également connu de régler le débit en fonction de mesures de concentration de gaz, par exemple à l'aide d'un dispositif 10 agencé à déterminer le pourcentage de méthane, de CO2 et d'oxygène, effectuées dans le réseau d'extraction, tel qu'illustré à la figure 1.

Néanmoins, la plupart des réglages nécessaires pour garantir une extraction de biogaz de qualité, oblige souvent à investir de grandes sommes d'argent dans des dispositifs onéreux, ce qui peut encore augmenter les frais de gestion de la zone de substances fermentescibles.

Le but de la présente invention est de réaliser un procédé de réglage, peu coûteux, où la qualité du gaz produit par les substances fermentescibles, en particulier des déchets dans une décharge est prise en considération et qui permet de mieux régler le débit d'extraction en fonction des variations de la qualité du biogaz, et en particulier de diminuer l'expansion de gaz vers l'extérieur des substances fermentescibles, de diminuer les odeurs en surface et/ou de limiter au maximum l'entrée d'air à l'intérieur du réseau d'extraction de gaz.

Dans ce but, le procédé selon l'invention est caractérisé en ce que ledit réglage est également réalisé en fonction d'une mesure au niveau dudit brûleur de l'admission d'air nécessaire pour la combustion du gaz à une température de combustion essentiellement constante.

En mesurant l'admission d'air au niveau du brûleur et en réglant le débit d'extraction de gaz en fonction de cette admission d'air mesurée, on a pu constater que l'on obtenait un procédé dynamique et peu coûteux qui règle rapidement le débit d'extraction dans le réseau en fonction des variations de la qualité du biogaz extrait.

Selon une alternative, ladite mesure de pression est une mesure d'une pression relative entre la pression atmosphérique et la pression du gaz produit par les substances soit dans ladite zone soit dans une zone périphérique des substances fermentescibles, tant ladite zone que la zone périphérique étant située en dehors dudit réseau d'extraction du gaz, ledit réglage est également réalisé en fonction d'une mesure au niveau dudit brûleur de l'admission d'air nécessaire pour la combustion du gaz à une température de combustion essentiellement constante. Etant donné qu'une mesure de pression relative comporte un degré de précision plus élevé par rapport à des mesures de pression absolue (typiquement de l'ordre de 0,01 mbar par rapport à 1 mbar pour des mesures de pression absolue, en particulier la mesure de pression atmosphérique), le réglage du débit d'extraction de gaz est davantage amélioré, et par conséquent, l'expansion de gaz vers l'extérieur des substances fermentescibles ainsi que l'entrée d'air dans le réseau est davantage diminuée. De plus, on a pu constater que les variations de pressions atmosphériques étaient plus rapidement détectées par cette mesure de pression relative par rapport à la mesure directe de pression atmosphérique.

Selon un premier mode de réalisation préférentiel du procédé suivant l'invention, la teneur en composé organique volatile (COV) est mesurée dans ladite zone périphérique et le débit d'extraction est réglé en fonction de ladite teneur mesurée. Cette mesure de teneur en COV en périphérie permet en outre d'affiner la régulation du débit d'extraction et de diminuer davantage l'expansion des gaz vers l'extérieur de la zone des substances fermentescibles.

La présente invention concerne également un ensemble d'extraction de gaz produit par des substances fermentescibles, comportant un réseau d'extraction de gaz, un organe de mesure de pression, un brûteur ayant des moyens d'admission d'air et un régulateur de débit d'extraction de gaz agencé à être relié à l'organe de mesure de pression et à régler le débit d'extraction dans le réseau, ledit organe de mesure de pression étant agencé à mesurer une pression en dehors dudit réseau d'extraction de gaz. Selon cette invention, l'ensemble d'extraction comprend aussi un moyen de mesure agencé pour produire un signal en fonction de l'admission d'air, ce moyen de mesure étant agencé pour fournir au régulateur ce signal. Le régulateur est lui agencé pour régler, sur base du signal reçu et d'après un algorithme de réglage, le débit d'extraction.

Cet ensemble permet de mettre en oeuvre le procédé suivant la revendication et permet donc de régler le débit de façon adéquate en fonction des variations de la qualité du biogaz extrait.

Selon une première forme de réalisation, l'air est admis dans le brûleur par l'intermédiaire de volets d'admission d'air, le moyen de mesure étant un potentiomètre agencé pour produire suivant l'ouverture des volets, le signal destiné au régulateur. Cette forme de réalisation est particulièrement intéressante puisque peu onéreuse à mettre en oeuvre. En effet, le potentiomètre est capable de transmettre une tension proportionnelle à l'ouverture des volets d'admission d'air directement au régulateur, ce qui est avantageux au point de vue coût de l'installation car cette mesure indirecte de la qualité du biogaz permet d'éviter les coûts d'analyse.

Selon une deuxième forme de réalisation préférentielle de l'ensemble suivant l'invention, ledit réseau comporte au moins une pompe agencée à être reliée audit régulateur de débit d'extraction de gaz pour faire varier ledit débit d'extraction. En outre ou selon une alternative, ledit réseau comporte au moins une vanne agencée à être reliée audit régulateur de débit d'extraction de gaz pour faire varier ledit débit d'extraction. La pompe à débit variable (typiquement munie d'un variateur de fréquence) permet d'adapter facilement le débit d'extraction. Les "au moins une vanne" peuvent être formées par une vanne d'étranglement dans le conduit principal et/ou des vannes prévues dans les conduits secondaires. La vanne d'étranglement permet de faire varier le débit global - en combinaison avec la pompe à débit variable ou en tant qu'alternative en utilisant une pompe à débit constant, tandis que les vannes dans les conduits secondaires permettent d'orienter préférentiellement les efforts d'extraction.

L'invention sera maintenant décrite plus en détail à l'aide des dessins qui illustrent un exemple de réalisation d'un ensemble suivant l'invention. Dans les dessins:
la figure 1 illustre un ensemble d'extraction de gaz selon l'état de la technique utilisé dans une décharge;
la figure 2 illustre une première forme de réalisation d'un ensemble d'extraction de gaz selon l'invention utilisé dans une décharge;
la figure 3 illustre une deuxième forme de réalisation d'un ensemble d'extraction de gaz selon l'invention utilisé dans une décharge; et
les figures 4 et 5 illustrent dans un graphique les résultats obtenus avec un ensemble selon l'invention.
produit par des déchets. Cet ensemble comporte un réseau d'extraction de gaz 12 à 16. Ce réseau comprend des puits d'extraction 12, formés par des conduits cylindriques munis d'ouvertures afin de permettre au gaz de s'introduire dans le réseau. Chaque puits d'extraction est relié à un conduit secondaires 13 correspondant. Les conduits secondaires 13 sont à leur tour reliés à un conduit principal 15.

Le conduit principal 15 comporte une pompe 16, agencée à appliquer une force d'aspiration dans les conduits pour extraire le gaz des déchets. Afin de pouvoir régler le débit d'extraction, la pompe 16 est une pompe à débit variable, muni par exemple d'un variateur de fréquence. En tant qu'alternative pour faire varier le débit global, on peut prévoir une vanne dans le conduit principal (non illustré). Tel qu'illustré sur les figures, on peut également prévoir des vannes automatiques 14 dans les conduits secondaires pour permettre concentrer à certains endroits les efforts d'extraction. Des détails concernant le réglage du débit seront décrit ci-après.

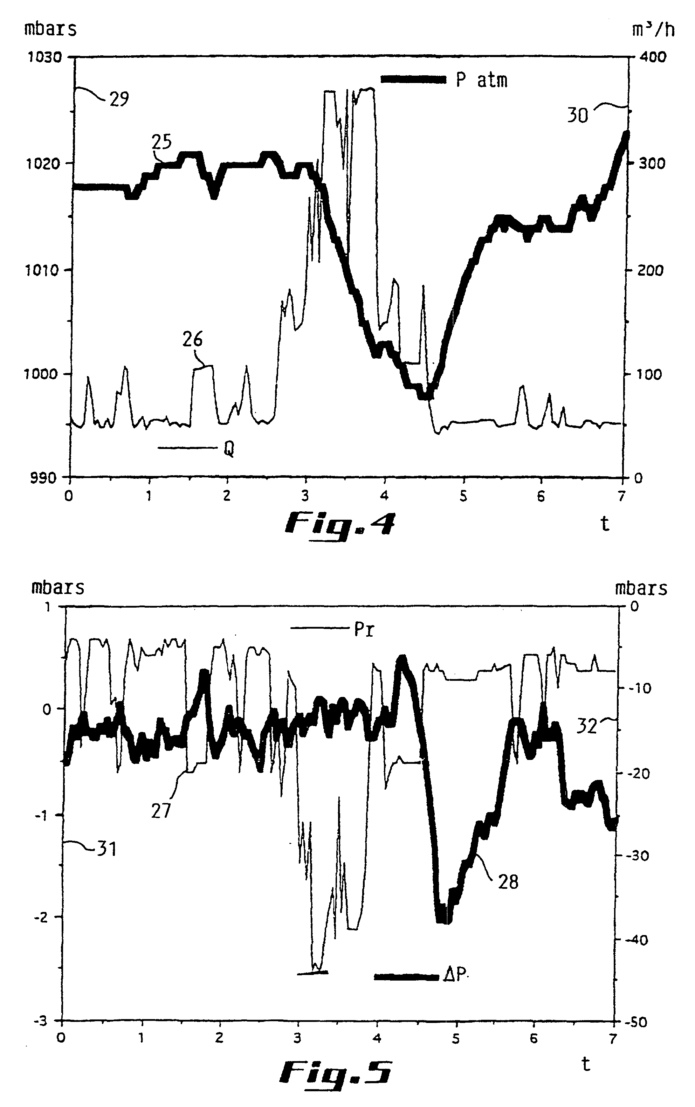

De préférence, tel qu'illustré aux figures 2 et 3, l'ensemble comporte tant la pompe à débit variable 16, que les vannes automatiques 14, puisque la pompe permet de régler le débit d'extraction de façon globale, tandis que les vannes automatiques permettent d'orienter préférentiellement les efforts d'extraction. Lorsque l'on constate par exemple qu'il y a un risque d'expansion de gaz, on oriente de préférence l'extraction vers les puits les plus proche de la périphérie de la décharge. Par contre, lorsque le gaz a tendance à se comprimer, il y a un risque d'entrée d'air dans le réseau, provenant en particulier de la périphérie de la décharge. Pour ces raisons, on oriente de préférence la force d'extraction vers les puits situés au centre du réseau. Lorsque des habitations sont situées relativement proche d'un segment de la décharge, on peut, lorsque le gaz a tendance à s'étendre, concentrer les efforts d'extractions vers les puits d'extractions se trouvant le plus près de ces habitations afin d'éviter que du gaz atteigne les caves de ces habitations.

Un brûleur 18 est relié au réseau d'extraction pour consommer le gaz extrait par le réseau. Le cas échéant, la chaleur produite est valorisée en produisant par exemple de l'électricité. Selon une alternative, le biogaz est emmagasiner pour servir ultérieurement en tant que substance comestible. Le cas échéant, on prévoit plusieurs brûleurs qui sont mis en marche en fonction du débit d'extraction effectuée.

Selon l'invention, l'ensemble comporte en outre un organe de mesure de pression 20, agencé à mesurer une pression en dehors du réseau d'extraction 12-16. En particulier, l'organe 20 est constitué par un capteur de pression relative placé dans un puits qui n'est pas relié à un des conduits secondaires 13 du réseau, comme illustré aux figures 2 et 3. Un tel capteur est donc agencé à mesurer une pression relative entre la pression atmosphérique et la pression de gaz dans la masse des déchets, et ceci de façon isolée par rapport au réseau d'extraction. Selon une alternative, l'organe est agencé à mesurer la pression atmosphérique. L'avantage de cette alternative est qu'il ne faut pas prévoir de puits pour y loger l'organe, mais qu'il faut simplement prévoir l'organe en surface. L'avantage du capteur de pression relative est toutefois qu'il permet d'obtenir des mesures ayant un degré de précision plus élevé par rapport à un organe de mesure de pression atmosphérique (typiquement de l'ordre de 0,01 mbar par rapport à 1 mbar) et également qu'il détecte plus rapidement des fluctuations de la pression atmosphérique, ainsi que tout problème du dispositif d'extraction (par exemple un conduit bouché ou l'arrêt de la pompe).

Tel qu'illustré aux figures 2 et 3, l'organe de mesure de pression est situé dans la zone des déchets, c'est-à-dire à l'intérieur de la périphérie 23. Selon une alternative, l'organe de mesure de pression est placé dans une zone périphérique 24 des déchets. Cette zone périphérique correspond à une zone perméable au gaz en contact avec la décharge et dépend donc du contexte géologique. C'est ainsi que pour un sous-sol formé principalement par de l'argile, la zone sera moins élevée que pour du sable, qui est plus perméable au gaz. Il y a également lieu de tenir compte d'éventuelles failles en sous-sol qui peuvent former des "conduits" pour le gaz. En pratique, la zone peut donc être de l'ordre de quelques mètres jusque plusieurs centaines de mètres. Dans le cas d'une mesure dans la zone périphérique et lorsque l'organe de mesure de pression est agencé à mesurer une pression relative, cette pression relative est la pression de la masse du sous-sol autour des déchets par rapport à la pression atmosphérique. Il est également concevable de prévoir plusieurs organes de mesures à plusieurs endroits.

Les mesures de pression sont amenées vers un régulateur 19, qui est agencé à interpréter les mesures et commander de façon adéquate la vitesse de la pompe 16, respectivement l'ouverture et la fermeture des vannes automatiques 14. De préférence, on utilise comme régulateur un système d'automation, comportant un grand nombre d'entrées de façon à pouvoir gérer un grand nombre de paramètres pour la régulation de l'extraction. Un des paramètres est donc la mesure de pression, d'autres seront décrits ci-après. Le système d'automation est de préférence équipé pour coopérer avec un logiciel pour introduire des algorithmes de régulation. Le système d'automation est en outre de préférence agencé à être commandé à distance par modem, de façon à pouvoir modifier les algorithmes de régulation et/ou la consigne par télécommunication. Un système d'automation du type T-Box de Techno Trade ® répond par exemple à ces critères, qui fournissent un système flexible. Ce type de système d'automation permet en outre d'emmagasiner des données, en particulier les mesures effectuées, ainsi que de transmettre des signaux d'alarme.

Avant de faire fonctionner l'ensemble selon l'invention, on détermine une consigne à laquelle la pression mesurée doit répondre, par exemple : la pression relative doit être située entre -0,15 et -0,10 mbar. Cette consigne est déterminée non seulement en fonction de la décharge mais également en fonction du contexte géologique - c'est-à-dire la perméabilité au gaz du sous-sol. Pour une décharge qui est située relativement proche des habitations, où il faut éviter au maximum les expansions de gaz vers l'extérieur de la périphérie de la décharge, on choisit comme consigne une plage de pression relative inférieure à celle indiquée ci-dessus, par exemple entre -0,30 et -0,20 mbar. Lorsqu'il n'y a pas d'habitations à proximité de la décharge, on choisit plutôt comme consigne une plage de pression relative supérieure à celle indiquée ci-dessus, par exemple entre -0,05 et 0 mbar, de façon à obtenir du gaz relativement riche et d'extraire plus rapidement les gaz présent dans une décharge et de réduire ainsi la durée de vie de la décharge.

La consigne peut également être déterminée en fonction de la quantité de gaz produit par rapport au volume de la décharge. Pour une décharge produisant relativement beaucoup de gaz on choisit comme consigne une plage inférieure par rapport à une décharge produisant relativement peu de gaz, afin de diminuer les risques d'expansions de gaz vers l'extérieur de la décharge.

En général, il faut chercher comme consigne un compromis entre d'une part une pression relative suffisamment élevée pour garantir une qualité de gaz satisfaisante et limiter au maximum l'entrée d'air dans le réseau, et d'autre part une pression relative suffisamment basse pour limiter au maximum l'expansion d'air vers l'extérieur des déchets. La consigne sera donc choisie en fonction de l'objectif souhaité, c'est-à-dire soit la retenue de l'expansion des gaz, soit la retenue des entrées d'air, soit ces deux objectifs. Il est à noter que le terme "expansion de gaz vers l'extérieur des déchets" inclus non seulement une expansion latérale des gaz, mais peut également inclure des expansions verticales de gaz. Ces expansions peuvent mener à des émanations de gaz en surface, ce qui crée des problèmes d'odeur. En particulier donc, l'objectif à atteindre pourrait être de limiter au maximum ces émanations de gaz en surface.

L'ensemble selon l'invention, tel qu'illustré à la figure 2 fonctionne comme suit. Le capteur de pression 17 mesure la pression relative Δp de la pression de gaz dans la masse des déchets p par rapport à la pression atmosphérique pₐ, donc Δp = p - pₐ. La consigne utilisé est par exemple : -0,15 mbar < Δp < -0,10 mbar.

Lorsque la pression atmosphérique pₐ diminue, la pression relative Δp augmente et peut atteindre la valeur supérieure de la consigne, par exemple Δp ≥ -0,10 mbar. Cela signifie que le gaz à tendance à s'étendre. Pour compenser cette expansion de gaz le régulateur 19 augmente le débit d'extraction, soit en augmentant le débit de la pompe, soit en ouvrant davantage les vannes automatiques, en particulier celles situées aux extrémités de la décharges, soit en combinant l'augmentation du débit de la pompe et de l'ouverture de vannes automatiques.

Lorsque la pression atmosphérique pₐ augmente, la pression relative Δp diminue et peut atteindre la valeur inférieure de la consigne, par exemple Δp ≤ -0,15 mbar. Cela signifie que l'extraction est trop puissante et que de l'air pourrait pénétrer dans la masse des déchets et donc dans le réseau. Pour éviter cette entrée d'air, le régulateur 19 diminue le débit d'extraction, soit en diminuant le débit de la pompe, soit en fermant davantage les vannes automatiques, en particulier celles situées aux extrémités de la décharges, soit en combinant la diminution du débit de la pompe et de la fermeture de vannes automatiques.

Dans la forme de réalisation illustré à la figure 2, le débit d'extraction est réglé en fonction de la pression mesurée en dehors du réseau d'extraction. De préférence, le débit est en outre réglé en fonction de paramètres supplémentaires, comme illustré à la figure 3 où les paramètres suivant sont en outre déterminés : teneur en composé organique volatile (COV) dans la zone périphérique 24 des déchets, qualité du biogaz et/ou prévision météo.

La mesure de teneur en COV dans la zone périphérique 24 des déchets permet de déterminer si des expansions de gaz vers l'extérieur de la décharge se produisent régulièrement. Ainsi, on peut déduire l'efficacité de l'algorithme utilisé dans le régulateur et l'adapter si nécessaire. L'adaptation des paramètres de l'algorithme peut le cas échéant être adapté automatiquement par le régulateur, en fonction des mesures effectuées. Le système d'automation du type T-Box de Techno Trade ® permet une telle adaptation automatique. Cette mesure de teneur en COV est par exemple effectuée à l'aide d'un détecteur d'ionisation de flammes (FID) agencé à déterminer la teneur en ppm (partie par million) d'hydrocarbures. On peut également effectuer des mesures de concentration de toluène en ppb (partie par milliard) à l'aide d'une technique de ionisation photoélectrique. En outre, on peut également mesurer le pourcentage de méthane (CH4) ou tout autre métabolite présente dans le gaz, de CO2 et d'oxygène à l'aide de techniques connues en tant que telles.

La qualité du biogaz peut en outre également être utilisé comme paramètre pour régler le débit d'extraction. Pour déterminer la qualité d'un gaz, il est connu que le volume d'air nécessaire pour la combustion du gaz donne une indication de la qualité du gaz. Selon un aspect de l'invention, on mesure par conséquent l'admission d'air au niveau du brûleur pour en déduire la qualité du biogaz.

Cette mesure d'admission d'air est en particulier réalisé en déterminant l'ouverture des volets d'admission d'air (non illustrés) à l'aide d'un potentiomètre relié à l'axe des volets d'une part et au régulateur d'autre part. Comme dans les systèmes connus, le brûleur est équipé d'un régulateur afin d'obtenir une température de combustion essentiellement constante (typiquement 1200 °C). Lorsque la température à tendance à augmenter (par exemple 1210 °C), les volets sont d'avantage ouvert pour faire entrer plus d'air. Par contre, lorsque la température à tendance à diminuer (par exemple 1190 °C) le degré d'ouverture des volets est diminué. Le potentiomètre fournit au régulateur une tension indiquant le degré d'ouverture des volets au régulateur. Le degré d'ouverture donne une indication de la richesse du gaz : si du gaz relativement riche est extrait, le brûleur nécessitera beaucoup d'air pour la combustion. Par conséquent, le degré d'ouverture des volets ainsi que la tension fournie seront relativement élevés. Par contre, lorsque le gaz est relativement faible, le degré d'ouverture des volets et la tension fournie au régulateur seront relativement moins élevés. Le régulateur règle en fonction de la tension reçue et d'après son algorithme de réglage le débit d'extraction. Un tel système de mesure est facile à réaliser, relativement précis, peu onéreux et fournit une indication directement utilisable (une tension) par le régulateur pour régler le débit.

Les prévisions météorologiques sont en outre également utilisées pour régler le débit d'extraction, en particulier lorsque l'on prévoit de fortes dépressions et que la capacité de la pompe ou du brûleur est limitée. Comme expliqué ci-dessus, une diminution de la pression atmosphérique mène à une expansion du gaz. Pour compenser cette expansion, il faut augmenter le débit. Si une forte dépression atmosphérique a lieu, il faut donc accroître substantiellement le débit d'extraction. Il se pourrait donc que le débit souhaité soit supérieur à la capacité de la pompe ou du brûleur. Ceci pourrait donc mener à une expansion des gaz en dehors de la périphérie, ce que l'on souhaite éviter. Pour solutionner ce problème, la consigne est modifié, c'est-à-dire que la plage est diminuée lorsque l'on prévoit une dépression, par exemple de -0,15 mbar < Δp < -0,10 mbar à -0,30 mbar < Δp < -0,25 bar. Cette modification de consigne à pour conséquence que l'on compense à l'avance la dépression qui se produira en augmentant à l'avance le débit d'extraction. Il est à noter que l'on peut prévoir, comme alternative ou en complément de cette provision, une ou plusieurs torchères auxiliaires qui sont enclenchés en fonction du débit d'extraction.

Comme mentionné ci-dessus, le régulateur est de préférence un système d'automation agencé à gérer un grand nombre de paramètres. Les paramètres peuvent être les suivants : plusieurs mesures de pressions relatives à plusieurs endroits dans la zone des déchets, ainsi que dans la zone périphérique 24 des déchets, des mesures de COV, mesures de méthane, de CO2 et d'oxygène, de toluène, prévisions météorologiques locales et mesures de l'admission d'air. Il est clair que ces paramètres peuvent être utilisé en combinaison dans un système d'extraction de gaz, mais chaque paramètre pourrait également être utilisé séparément dans un tel système.

En fonction de l'objectif souhaité, on peut attribuer à certaines mesures une priorité plus élevée qu'à d'autre. En pratique l'algorithme utilisé tient compte de ces priorités.

Lors d'une première utilisation de l'ensemble selon l'invention, on n'a pas la garantie que l'algorithme utilisé au départ est suffisamment efficace pour l'objectif souhaité. Il y a donc lieu de tenir en premier lieu compte des mesures de teneur en gaz dans la zone périphérique 24 (en particulier mesures de COV, mesures de méthane (%), de CO2 (%), d'oxygène (%), d'hydrocarbures (ppm) et de toluène (ppb)) pour adapter le cas échéant l'algorithme et de faire régler ainsi le débit d'extraction en fonction de l'algorithme modifié. Dans ce cas, les mesures de teneur en gaz ont une priorité plus élevée par rapport aux autres mesures.

Lorsque les prévisions météorologiques locales prévoient une forte dépression atmosphérique et lorsque la capacité de débit est insuffisante pour compenser cette forte dépression, il y a lieu d'attribuer à ces prévisions météorologiques une priorité supérieure, afin d'adapter la consigne comme décrit ci-dessus.

Lorsque la décharge est située relativement proche des habitations, il y lieu d'attribuer une priorité relativement élevée à la (aux) mesure(s) de pression, en particulier à la (aux) mesure(s) les plus proches des habitations.

Lorsque l'objectif est de garantir une bonne combustion, sans devoir tenir essentiellement compte d'expansion de gaz, par exemple dans le cas où les habitations sont suffisamment éloignée de la décharge et lorsque l'on souhaite récupérer le biogaz pour utilisation ultérieure en tant que substance comestible, il y a lieu d'attribuer à la mesure d'admission d'air une priorité relativement élevé.

Selon les figures, l'ensemble comporte un seul réseau d'extraction. Il est entendu que l'on peut prévoir un ensemble comportant plusieurs réseaux, qui sont le cas échéant, connecter au(x) même(s) brûleur(s) ou également au même régulateur. Ainsi, on pourrait prévoir dans une seule décharge trois réseaux ayant chacun leur propre consigne et algorithme de réglage : un "réseau périphérique" à la périphérie des déchets ayant comme objectif de limiter au maximum l'expansion latérale des gaz, un "réseau central" ayant comme objectif d'extraire du gaz relativement riche et donc de limiter au maximum l'entrée d'air dans le réseau et un "réseau en surface", donc sans puits d'extraction, ayant comme objectif de limiter au maximum les émanations de gaz en surface. L'avantage de relier les réseaux au(x) même(s) brûleur(s) est que l'on peut mélanger les gaz des différents réseaux et compenser ainsi un gaz relativement pauvre d'un premier réseau à un gaz relativement riche d'un deuxième réseau afin de garantir une bonne combustion d gaz extrait.

Le cas échéant, le brûleur comporte un dispositif de sécurité à l'allumage afin de contrôler l'allumage lors de la mise en marche. Ce dispositif de sécurité est en particulier basé sur une mesure d'onde de choc à l'allumage de la veilleuse, ce principe étant connu en tant que tel par exemple dans l'industrie pétrolière. Lorsque l'onde de choc est faible, cela signifie que le gaz est relativement pauvre. En fonction de la grandeur de cette onde de choc, on déterminera donc un temps de purge avant un nouvel essai d'allumage. Ce système permet donc de faire varier le temps de purge avant un nouvel essai d'allumage en fonction de la richesse du gaz.

L'ensemble selon l'invention peut être utilisé dans une décharge, tel qu'illustré sur les figures. Il est également concevable d'utiliser cet ensemble dans système de récupération de gaz d'autres substances fermentescibles, par exemple pour récupérer du biogaz produit par des matières organiques fermentescibles (compost, fumier de ferme, ...). Dans ce cas, le biogaz n'est pas amené vers un brûleur mais directement récupérer en tant que produit de combustion pour utilisation ultérieure.

Les figures 4 et 5 illustrent en graphique des résultats d'expériences effectuées avec l'ensemble selon l'invention. Dans les graphiques, les échelles suivantes ont été utilisées : l'axe des abscisses correspond au temps en jours (jour 0 à jour 7); l'axe des ordonnées 29 est l'axe pour la pression atmosphérique (pₐₜₘ) 25 en millibar (mbars); l'axe des ordonnées 30 est l'axe pour le débit d'extraction (Q) 26 en mètre cube par heure (m³/h); l'axe des ordonnées 31 est l'axe pour la pression relative Δp 28 en millibar (mbars) et l'axe des ordonnées 32 est l'axe pour une mesure de dépression pᵣ 27 dans le réseau (près de la pompe 16) en millibar (mbars).

Comme illustré aux figures 4 et 5, des chutes de pression atmosphérique ont mené à une augmentation du débit d'extraction, tandis qu'une augmentation de la pression atmosphérique a mené à des diminutions du débit d'extraction. Ces variations du débit d'extraction ont permis de garder la pression relative Δp essentiellement entre -0,5 et 0 mbar. Aux environs du jour 5, la pression relative Δp atteignait toutefois une valeur d'environ -2 mbar. La raison est la suivante : à ce moment, une forte augmentation de la pression atmosphérique a eu lieu. Il fallait donc diminuer le débit. Si l'on maintenait toutefois la même consigne (entre -0,5 et 0 mbar), on aurait du momentanément arrêter l'extraction. Afin de ne pas inquiéter les riverains par un arrêt pouvant à leurs yeux correspondre à une panne, on souhaite maintenir le débit d'extraction à un minimum d'environ 50 m³/h (voir la figure 4). Par conséquent, la consigne a été temporairement interrompue, et ce grâce aux prévisions météorologiques. Aux environs du jour 5,5 la consigne était à nouveau d'application. Dans l'état de la technique, il aurait fallu varier la consigne de dépression dans le réseau pᵣ 27 (qui est selon l'état de la technique une constante, par exemple -50 mbar tel que décrit dans l'introduction) d'une valeur de -5 à -45 mbar pour obtenir un effet semblable. Il est à noter que lors de la forte dépression atmosphérique (jour 3 à jour 4,5), la pression relative varie de moins de 1 mbar, tandis que la dépression dans le réseau varie considérablement (50 mbar).

. On a pu constater qu'avec le système selon l'invention, on obtenait une gestion plus efficaces des substances fermentescibles par rapport à l'état de la technique. En particulier, le système permet, par rapport à l'état de la technique, d'obtenir une amélioration de la qualité du biogaz, de limiter les arrêts des brûleurs, de limiter l'expansion de gaz vers l'extérieur de la décharge, de limiter les problèmes d'odeurs en surface et/ou de diminuer la durée de vie de la décharge, et ce par une gestion dynamique et automatique des paramètres d'extraction du biogaz.

## Revendications

1. Procédé de réglage d'un débit d'extraction de gaz produit par des substances fermentescibles pouvant être en contact avec de l'air atmosphérique, lequel procédé comporte l'extraction du gaz produit dans une zone (11) où se trouvent lesdites substances et la collecte dudit gaz dans un réseau d'extraction de gaz (12 à 16) pour ensuite être consumé dans un brûleur (18), le procédé comprenant également une mesure de la pression atmosphérique soit dans ladite zone soit dans une zone périphérique des substances fermentescibles, tant ladite zone que la zone périphérique étant située en dehors dudit réseau d'extraction du gaz, ledit réglage du débit d'extraction du gaz étant réalisé en fonction de ladite pression atmosphérique, **caractérisé en ce que** ledit réglage est également réalisé en fonction d'une mesure au niveau dudit brûleur de l'admission d'air nécessaire pour la combustion du gaz à une température de combustion essentiellement constante.

2. Procédé de réglage d'un débit d'extraction de gaz produit par des substances fermentescibles pouvant être en contact avec de l'air atmosphérique, lequel procédé comporte l'extraction du gaz produit dans une zone (11) où se trouvent lesdites substances et la collecte dudit gaz dans un réseau d'extraction de gaz (12 à 16) pour ensuite être consumé dans un brûleur (18), le procédé comprenant également une mesure d'une pression, ledit réglage du débit d'extraction du gaz étant réalisé en fonction de ladite pression, **caractérisé en ce que** ladite mesure de pression est une mesure d'une pression relative entre la pression atmosphérique et la pression du gaz produit par les substances soit dans ladite zone soit dans une zone périphérique des substances fermentescibles, tant ladite zone que la zone périphérique étant située en dehors dudit réseau d'extraction du gaz, ledit réglage est également réalisé en fonction d'une mesure au niveau dudit brûleur de l'admission d'air nécessaire pour la combustion du gaz à une température de combustion essentiellement constante.

3. Procédé suivant l'une des revendications précédentes, dans lequel la teneur en composé organique volatile (COV) est mesurée dans ladite zone périphérique et le débit d'extraction est réglé en fonction de ladite teneur en COV mesurée.

4. Ensemble d'extraction de gaz produit par des substances fermentescibles, comportant un réseau d'extraction de gaz, un organe de mesure de pression (17), un brûleur (18) ayant des moyens d'admission d'air et un régulateur (19) de débit d'extraction de gaz agencé à être relié à l'organe de mesure de pression et à régler le débit d'extraction dans le réseau, ledit organe de mesure de pression étant agencé à mesurer une pression en dehors dudit réseau d'extraction de gaz, **caractérisé en ce que** ledit ensemble d'extraction comprend un moyen de mesure agencé pour produire un signal en fonction de l'admission d'air nécessaire pour la combustion du gaz à une température de combustion essentiellement constante au niveau dudit brûleur, ledit moyen de mesure étant agencé pour fournir au régulateur ledit signal, ledit régulateur étant agencé pour régler, sur base dudit signal reçu et d'après un algorithme de réglage, ledit débit d'extraction.

5. Ensemble suivant la revendication 4, **caractérisé en ce qu'**il comprend des volets d'admission d'air agencés pour faire varier l'admission d'air dans ledit brûleur, ledit moyen de mesure étant un potentiomètre agencé pour produire suivant l'ouverture desdits volets, ledit signal.

6. Ensemble suivant la revendication 4 ou 5, dans lequel ledit réseau comporte au moins une pompe (16) agencée à être reliée audit régulateur de débit d'extraction de gaz pour faire varier ledit débit d'extraction.

7. Ensemble selon l'une des revendications 4 à 6, dans lequel ledit réseau comporte au moins une vanne agencée à être reliée audit régulateur de débit d'extraction de gaz pour faire varier ledit débit d'extraction.

8. Ensemble suivant l'une des revendications 4 à 7, comportant plusieurs réseaux d'extraction de gaz, dont le débit d'extraction est agencé à être réglé différemment pour chaque réseau.

## Claims

1. Method of regulating an extraction rate of gas produced by fermentable substances which may be in contact with atmospheric air, and the said method comprising the extraction of the gas produced in a zone (11) where the said substances are situated and the collection of the said gas in a gas extraction system (12 to 16) in order then to be consumed in a burner (18), the method also comprising a measurement of the atmospheric pressure either in the said zone or in a peripheral zone of the fermentable substances, both the said zone and the peripheral zone being situated outside the said gas extraction system, the said regulation of the gas extraction rate being effected as a function of the said atmospheric pressure, **characterised in that** the said regulation is also effected according to a measurement at the said burner of the admission of air necessary for the combustion of the gas at an essentially constant combustion temperature.

2. Method of regulating an extraction rate of gas produced by fermentable substances which may be in contact with atmospheric air, the said method comprising the extraction of the gas produced in a zone (11) where the said substances are situated and the collection of the said gas in a gas extraction system (12 to 16) in order then to be consumed in a burner (18), the method also comprising a measurement of a pressure, the said regulation of the gas extraction rate being effected according to the said pressure, **characterised in that** the said pressure measurement is a measurement of a relative pressure between atmospheric pressure and the pressure of the gas produced by the substances either in the said zone or in a peripheral zone of the fermentable substances, both the said zone and the peripheral zone being situated outside the said gas extraction system, the said regulation is also effected according to a measurement at the said burner of the admission of air necessary for the combustion of the gas at an essentially constant combustion temperature.

3. Method according to one of the preceding claims, in which the volatile organic compound (VOC) content is measured in the said peripheral zone and the extraction rate is regulated according to the said VOC content measured.

4. Assembly for the extraction of gas produced by fermentable substances, comprising a gas extraction system, a pressure measurement device (17), a burner (18) having air inlet means and a regulator (19) for the gas extraction rate arranged so as to be connected to the pressure measurement device and to regulate the extraction rate in the system, the said pressure measurement device being arranged to measure a pressure outside the said gas extraction system, **characterised in that** the said extraction assembly comprises a measurement means arranged to produce a signal as a function of the admission of air necessary for the combustion of the gas at an essentially constant combustion temperature at the said burner, the said measurement means being arranged to supply the said signal to the regulator, the said regulator being arranged so as to regulate, on the basis of the said signal received, and in accordance with a regulation algorithm, the said extraction rate.

5. Assembly according to Claim 4, **characterised in that** it comprises air inlet flaps arranged to vary the admission of air into the said burner, the said measurement means being a potentiometer arranged so as to produce the said signal according to the opening of the said flaps.

6. Assembly according to Claim 4 or 5, in which the said system comprises at least one pump (16) arranged to be connected to the said gas extraction rate regulator in order to vary the said extraction rate.

7. Assembly according to one of Claims 4 to 6, in which the said system comprises at least one valve arranged to be connected to the said gas extraction rate regulator in order to vary the said extraction rate.

8. Assembly according to one of Claims 4 to 7, comprising several gas extraction systems, whose extraction rate is arranged to be regulated differently for each system.

## Patentansprüche

1. Regelverfahren für einen Durchsatz von Gas, das aus vergärbaren Substanzen entstanden ist, die mit der Umgebungsluft in Kontakt sein können, umfassend die Gewinnung des in einer Zone (11), in der sich die genannten Substanzen befinden, entstandenen Gases und die Sammlung des Gases in einem Gasfassungssystem (12 bis 16), um anschließend in einem Brenner (18) verbraucht zu werden, wobei das Verfahren auch eine Messung des Luftdrucks entweder in der genannten Zone, oder in einer Randzone der vergärbaren Substanzen umfasst, wobei sowohl die genannte Zone wie auch die Randzone außerhalb des Gasfassungssystems liegen, wobei die Regelung des Durchsatzes der Entgasung in Abhängigkeit des Luftdrucks durchgeführt wird, **dadurch gekennzeichnet, dass** die Regelung auch in Abhängigkeit von einer Messung der Luftzufuhr am Brenner durchgeführt wird, die für die Verbrennung des Gases bei im Wesentlichen konstanter Temperatur nötig ist.

2. Regelverfahren für den Durchsatz von Gas, das aus vergärbaren Substanzen entstanden ist, die in Kontakt mit der Umgebungsluft sein können, umfassend die Gewinnung des in einer Zone (11), in der sich die genannten Substanzen befinden, entstandenen Gases und die Sammlung des Gases in einem Gasfassungssystem (12 bis 16), um anschließend in einem Brenner (18) verbraucht zu werden, wobei das Verfahren auch eine Druckmessung umfasst, wobei die Regelung des Durchsatzes der Entgasung in Abhängigkeit des Druckes durchgeführt wird, **dadurch gekennzeichnet, dass** die genannte Druckmessung eine Messung einer Druckdifferenz zwischen dem atmosphärischen Luftdruck und dem Druck des aus den Substanzen entstandenen Gases entweder in der genannten Zone, oder in einer Randzone der vergärbaren Substanzen ist, wobei sowohl die genannte Zone wie auch die Randzone außerhalb des Gasfassungssystems liegen, wobei die Regelung des Durchsatzes der Entgasung in Abhängigkeit von dem genannten Luftdruck durchgeführt wird, wobei die Regelung auch in Abhängigkeit von einer Messung der Luftzufuhr am Brenner durchgeführt wird, die für die Verbrennung des Gases bei im Wesentlichen konstanter Temperatur nötig ist.

3. Verfahren nach einem der vorhergehenden Ansprüche, wobei der Gehalt an flüchtigen organischen Verbindungen in der Randzone gemessen, und der Durchsatz der Entgasung in Abhängigkeit von dem gemessenen Gehalt an flüchtigen organischen Verbindungen geregelt wird.

4. Anlage zur Gewinnung von aus vergärbaren Substanzen entstandenen Gasen, umfassend ein Gasfassungssystem, ein Druckmessgerät (17), einen Brenner (18), der Mittel zur Luftzufuhr aufweist, und einen Durchsatzregler der Entgasung (19), der dafür eingerichtet ist, mit dem Druckmessgerät verbunden zu werden und den Gasdurchsatz in dem Gasfassungssystem zu regeln, wobei das Druckmessgerät dafür eingerichtet ist, einen Druck außerhalb des Gasfassungssystems zu messen, **dadurch gekennzeichnet, dass** die Anlage zur Gasgewinnung ein Mittel für die Messung aufweist, das dafür eingerichtet ist, ein Signal zu erzeugen in Abhängigkeit von der Luftzufuhr, die nötig ist, um das Gas bei einer im Wesentlichen konstanten Verbrennungstemperatur im Brenner zu verbrennen, wobei das Mittel für die Messung dafür eingerichtet ist, dem Regler das erwähnte Signal zu liefern, wobei der Regler dafür eingerichtet ist, auf der Basis des empfangenen Signals und nach einem Regelalgorithmus den Durchsatz der Entgasung zu regeln.

5. Anlage nach Anspruch 4, **dadurch gekennzeichnet, dass** sie Lufteinlassklappen umfasst, die dafür eingerichtet sind, die Luftzufuhr zum Brenner zu variieren, wobei das erwähnte Mittel zur Messung ein Potentiometer ist, das dafür eingerichtet ist, das Signal entsprechend der Öffnung der Lufteinlassklappen zu erzeugen.

6. Anlage nach Anspruch 4 oder 5, wobei das Gasfassungssystem mindestens eine Pumpe (16) umfasst, die dafür eingerichtet ist, an den Regler für den Durchsatz der Entgasung angeschlossen zu werden, und diesen Durchsatz zu variieren.

7. Anlage nach einem der Ansprüche 4 bis 6, wobei das Gasfassungssystem mindestens ein Ventil umfasst, das dafür eingerichtet ist, mit dem Regler für den Durchsatz der Entgasung verbunden zu werden, um diesen Durchsatz zu variieren.

8. Anlage nach einem der Ansprüche 4 bis 7, die mehrere Gasfassungssysteme umfasst, die dafür eingerichtet sind, dass ihr Gasdurchsatz für jedes Gasfassungssystem unterschiedlich geregelt werden kann.
